# EUROPEAN PATENT APPLICATION

(11) **EP 2 434 768 A2**
(43) Date of publication of application: **28.03.2012**
(21) Application number: 11175464.4
(22) Date of filing: 26.07.2011
(51) Int. Cl.: H04N 13/02

(54) **Display apparatus and method for processing image applied to the same**

(30) Priority: 28.09.2010 KR 20100093913
(71) Applicant: SAMSUNG ELECTRONICS CO., LTD., Suwon-si Gyeonggi-do 442-742 (KR)
(72) Inventor: Sohn, Young-wook, Gyeonggi-do (KR)
(74) Representative: Clark, David James

(57) **Abstract**

A display apparatus and a method for processing an image are provided. The image processing method includes: extracting an object from an input image; obtaining depth information of the object from the input image; adjusting a size of the object using the depth information; and alternately outputting a left eye image and a right eye image including the object of which the size is adjusted. Therefore, the size of the object is adjusted using depth information of the input image and thus, a user may enjoy a 3D image having more depth and more stereoscopic sense.

## Description

### 1. Field

Apparatuses and methods consistent with exemplary embodiments relate to a display apparatus and a method for processing an image applied to the same, and more particularly, to a display apparatus which outputs a three-dimensional (3D) image by displaying a left eye image and a right eye image alternately and a method for processing an image applied to the same.

### 2. Description of Related Art

A three-dimensional (3D) stereoscopic image technology is applicable to various fields such as information communication, broadcasting, medicine, education and training, military, gaming, animation, virtual reality, computer aided drafting (CAD), and industrial technology, and is regarded as a core base technology for the next generation 3D stereoscopic multimedia information communication, which is used in all the aforementioned fields.

Generally, a stereoscopic sense that a person perceives occurs from a complex effect of the degree of change of thickness of the person's eye lens according to the location of an object to be observed, the angle difference of the object observed from both eyes, the differences of location and shape of the object observed from both eyes, the time difference due to movement of the object, and other various psychological and memory effects.

In particular, binocular disparity, caused by about a 6~7 cm lateral distance between a person's left eye and right eye, can be regarded as the main cause of the stereoscopic sense. Due to binocular disparity, the person perceives the object with an angle difference, which makes the left eye and the right eye receive different images. When these two images are transmitted to the person's brain through retinas, the brain can perceive the original 3D stereoscopic image by combining the two pieces of information exactly.

There are two types of stereoscopic image display apparatuses: glasses-type apparatuses which use special glasses, and nonglasses-type apparatuses which do not use such special glasses. A glasses-type apparatus may adopt a color filtering method which separately selects images by filtering colors which are in mutually complementary relationships, a polarized filtering method which separates the images received by a left eye from those received by a right eye using a light-shading effect caused by a combination of polarized light elements meeting at right angles, or a shutter glasses method which enables a person to perceive a stereoscopic sense by blocking a left eye and a right eye alternately in response to a sync signal which projects a left eye image signal and a right eye image signal to a screen.

A 3D image includes a left eye image perceived by a left eye and a right eye image perceived by a right eye. A 3D image display apparatus displays the stereoscopic sense of a 3D image using time difference between a left eye image and a right eye image.

Meanwhile, with the rapid development of hardware for displaying a 3D image, apparatuses through which a user may watch a 3D image have been provided at a fast pace. However, the amount of 3D contents provided to users is not enough to satisfy all users.

Accordingly, a method for converting a two-dimensional (2D) image into a 3D image is being considered to provide more 3D contents to users. However, a 3D image which is converted from a 2D image has less stereoscopic sense and less sense of depth compared to a 3D image photographed by a 3D camera and thus, does not provide perfect a stereoscopic sense.

Therefore, a method for processing a 3D image so that a user may view the 3D image having more stereoscopic sense and more depth is required.

### SUMMARY

Aspects of exemplary embodiments relate to a display apparatus which improves a sense of depth by extracting information regarding an object and the depth of the object from an input image and adjusting the size of the object using the depth information and a method for processing an image applied to the same.

According to an aspect of an exemplary embodiment, there is provided a method for processing an image, the method including: extracting an object from an input image; obtaining depth information of the object from the input image; adjusting a size of the object using the depth information; and alternately outputting a left eye image and a right eye image including the object of which the size is adjusted.

The adjusting may include increasing the size of the object if a depth value of the object is less than a threshold value, and decreasing the size of the object if the depth value of the object exceeds the threshold value.

The adjusting may include increasing the size of an object in front from among a plurality of objects or decreasing a size of an object in back from among a plurality of objects.

The adjusting may further include, if there is a gap around the object of which the size is adjusted, filling the gap by interpolating a background area of the object.

The adjusting the size of the object may include adjusting the size of the object to a value input by a user.

The adjusting the size of the object may include adjusting the size of the object to a predefined value at a time of manufacturing.

The input image may be a two-dimensional (2D) image, and the method may further include generating the left eye image and the right eye image corresponding to the 2D image, and the adjusting may include adjusting the size of the object included in the left eye image and the right eye image.

The input image may be a three-dimensional (3D) image, and the method may further include generating the left eye image and the right eye image before the object is extracted.

According to an aspect of another exemplary embodiment, there is provided a display apparatus including: an image input unit which receives an image; a 3D image representation unit which generates a left eye image and a right eye image corresponding to the input image; a controlling unit which controls the 3D image representation unit to extract an object from the input image, obtain depth information of the object from the input image, and adjust a size of the object using the depth information; and a display unit which alternately outputs a left eye image and a right eye image including the object of which the size is adjusted.

The controlling unit may control to increase the size of the object if a depth value of the object is less than a threshold value and decrease the size of the object if the depth value of the object exceeds the threshold value.

The controlling unit may control to increase the size of the object in front from among a plurality of objects or decrease the size of the object in back from among a plurality of objects.

The controlling unit, if there is a gap around the object of which the size is adjusted, may control the 3D image representation unit to fill the gap by interpolating a background area of the object.

The controlling unit may adjust the size of the object to a value input by a user.

The controlling unit may adjust the size of the object to a predefined value at a time of manufacturing.

The input image may be a 2D image, and the controlling unit may control to generate the left eye image and the right eye image corresponding to the 2D image and adjust the size of the object included in the left eye image and the right eye image.

The input image may be a 3D image, and the 3D image representation unit may generate the left eye image and the right eye image before the object is extracted.

According to an aspect of another exemplary embodiment, there is provided a method for processing an image, the method including: adjusting a size of an object of an input image according to a depth of the object in the input image; and outputting a left eye image including the object of which the size is adjusted and a right eye image including the object of which the size is adjusted.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will be more apparent by describing certain exemplary embodiments with reference to the accompanying drawings, in which:
FIG. 1 is a block diagram illustrating the configuration of a display apparatus according to an exemplary embodiment;
FIG. 2 is a block diagram illustrating the configuration of a display apparatus in detail according to an exemplary embodiment;
FIGS. 3A to 3D are views to explain an image processing process in which the size of an object is adjusted according to a depth value according to an exemplary embodiment;
FIGS. 4A to 4D are views to explain an image processing process in which the size of an object is adjusted according to its relative location according to an exemplary embodiment;
FIGS. 5A to 5D are views to explain an image processing process in which the surrounding space of an object which is adjusted to have small size is interpolated according to an exemplary embodiment; and
FIG. 6 is a flowchart to explain an image processing process in which the size of an object is adjusted based on depth information according to an exemplary embodiment.

### DETAILED DESCRIPTION OF EXEMPLARY EMBODIMENTS

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail. Moreover, expressions such as "at least one of," when preceding a list of elements, modify the entire list of elements and do not modify the individual elements of the list.

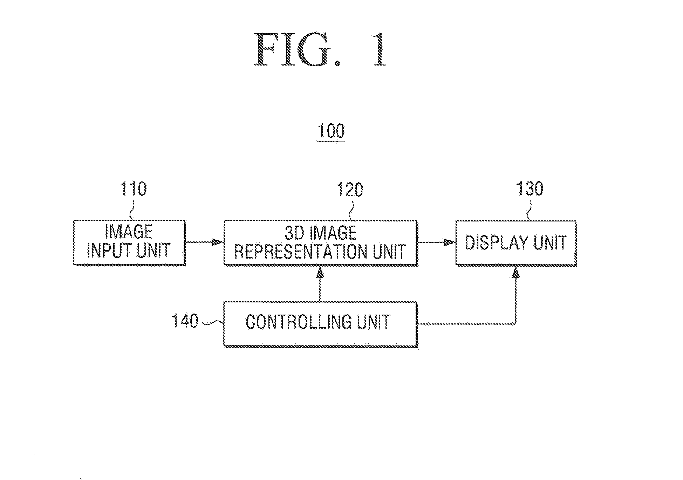

FIG. 1 is a block diagram illustrating the configuration of a display apparatus 100 according to an exemplary embodiment. As illustrated in FIG. 1, the display apparatus 100 includes an image input unit 110, a three-dimensional (3D) image representation unit 120, a display unit 130, and a controlling unit 140.

The image input unit 110 receives an image signal from a broadcast station or a satellite, or an external apparatus which is connected to the image input unit 110. Herein, the input image may be a two-dimensional (2D) image or a 3D image. If a 2D image is received, the display apparatus 100 converts the 2D image into a 3D image and provides the converted image to a user. If a 3D image is received, the display apparatus performs signal-processing on the 3D image and provides the signal-processed image to a user.

The 3D image representation unit 120 generates a left eye image and a right eye image corresponding to an input image under the control of the controlling unit 120, which will be explained below. Specifically, if a 2D image is input, the 3D image representation unit 120 generates a left eye image and a right eye image by changing the location of an object included in the 2D image. In this case, the 3D image representation unit 120 provides a 3D image having more depth and stereoscopic sense by generating a left eye image and a right eye image in which the size of an object is adjusted according to depth information.

If a 3D image is input, the 3D image representation unit 120 may generate a left eye image and a right eye image of which size is interpolated to fit one screen using signal-processed 3D image data. In this case, the 3D image representation unit 120 also generates a left eye image and a right eye image in which the size of an object is adjusted according to depth information.

The display unit 130 alternately outputs the left eye image and the right eye image generated by the 3D image representation unit 120. In this case, the generated left eye image and right eye image include an object of which size is adjusted according to depth information.

The controlling unit 140 controls overall operations of the display apparatus (e.g., a television) according to a user's command transmitted from a manipulation unit (not shown).

In particular, the controlling unit 140 extracts an object from an image input by the image input unit 110. In addition, the controlling unit 140 generates a depth map by obtaining depth information regarding the object from the input image. Herein, the depth information represents information regarding the depth of an object, i.e., information regarding how close an object is to a camera.

The controlling unit 140 controls the 3D image representation unit 120 to adjust the size of the object included in an input image using the extracted depth information. Specifically, if it is determined that the distance between a camera and an object is close, the controlling unit 140 controls the 3D image representation unit 120 to enlarge the size of the object. Alternatively, if it is determined that the distance between a camera and an object is far, the controlling unit 140 controls the 3D image representation unit 120 to reduce the size of the object. The method for adjusting the size of an object according to depth information will be explained in detail below.

As described above, as the size of an object is adjusted using the depth information of an input image, a user may be provided with a 3D image having more depth and stereoscopic sense.

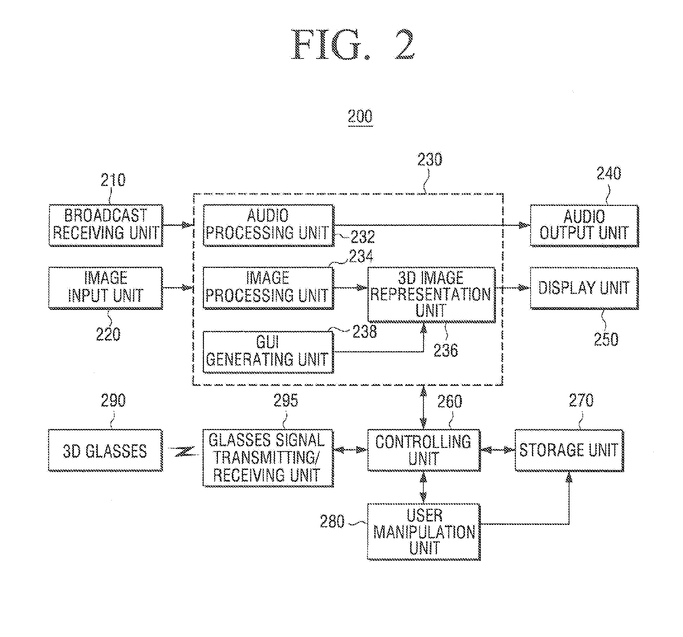

FIG. 2 is a block diagram illustrating a detailed configuration of a 3D TV 200 according to an exemplary embodiment. As illustrated in FIG. 2, the 3D TV 200 includes a broadcast receiving unit 210, an image input unit 220, an A/V processing unit 230, an audio output unit 240, a display unit 250, a controlling unit 260, a storage unit 270, a user manipulation unit 280, and a glasses signal transmitting/receiving unit 295.

The broadcast receiving unit 210 receives a broadcast from a broadcasting station or a satellite via wire or wirelessly and demodulates the received broadcast. In this case, the broadcast receiving unit 210 receives a 2D image signal including 2D image data or a 3D image signal including 3D image data.

The image input unit 220 is connected to an external apparatus and receives an image. In particular, the image input unit 220 may receive 2D image data or 3D image data from the external apparatus. In this case, the image input unit 220 may interface with S-Video, Component, Composite, D-Sub, DVI, HDMI, and so on.

The 3D image data represents data including 3D image information and includes left eye image data and right eye image data in one data frame area. The 3D image data is divided according to how the left eye image data and the right eye image data are included.

In particular, 3D image data may be classified into a side-by-side method, a top-bottom method, and a 2D+depth method in which left eye image data and right eye image data are included according to a split method. In addition, 3D image data may be classified into a horizontal interleave method, a vertical interleave method, and a checker board method in which left eye image data and right eye image data are included according to an interleave method.

The A/V processing unit 230 performs signal processing such as video decoding, video scaling, audio decoding, etc., with respect to an image signal and an audio signal input from the broadcast receiving unit 210 and the image input unit 220 and generates a graphical user interface (GUI).

Meanwhile, if an input image and audio signals are stored in the storage unit 270, the A/V processing unit 230 may compress the input image and audio so as to store them in a compressed form.

As illustrated in FIG. 2, the A/V processing unit 230 includes an audio processing unit 232, an image processing unit 234, a 3D image representation unit 236, and a GUI generating unit 238.

The audio processing unit 232 performs signal processing such as audio decoding with respect to an input audio signal and outputs the processed audio signal to the audio output unit 240.

The image processing unit 234 performs signal processing such as video decoding and video scaling with respect to an input image signal. In this case, if 2D image data is input and a user's command to convert the 2D image data into 3D image data is input, the image processing unit 234 outputs signal-processed 2D image to the 3D image representation unit 236. If 3D image data is input, the image processing unit 234 outputs the input 3D image data to the 3D image representation unit 236.

The 3D image representation unit 236 generates a left eye image and a right eye image using input 2D image data. That is, the 3D image representation unit 236 generates a left eye image and a right eye image to be displayed on the screen in order to represent a 3D image. Specifically, the 3D image representation unit 236 generates a left eye image and a right eye image by moving an object included in a 2D image left and right respectively in order to represent a 3D image. In this case, an object included in the 2D image moves to the right in the left eye image, and an object included in the 2D image moves to the left in the right eye image. Herein, how far the objects move may be set when a display apparatus is manufactured or input by a user so as to create optimum stereoscopic sense of a 3D image.

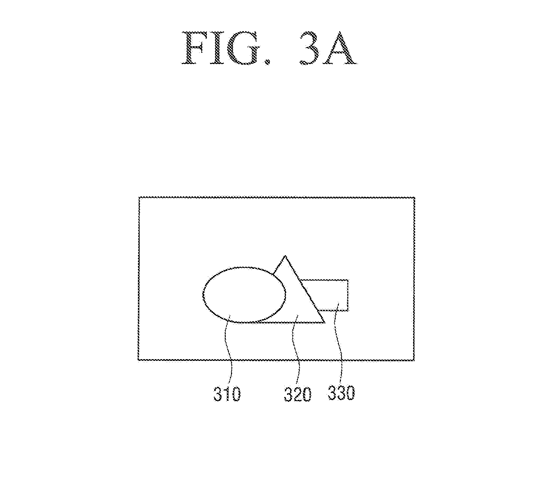

In addition, the 3D image representation unit 236 generates a left eye image and a right eye image by adjusting the size of an object included in a 2D image according to depth information. Specifically, if it is determined that the distance between a camera and an object is close based on depth information, the 3D image representation unit 236 may generate a left eye image and a right eye image by enlarging the size of the object. Alternatively, if it is determined that the distance between a camera and an object is far, the 3D image representation unit 236 may generate a left eye image and a right eye image by reducing the size of the object. The method for adjusting the size of an object based on depth information will be explained in detail below with reference to FIGS. 3A to 5D.

If an input image is 3D image data, the 3D image representation unit 236 may generate a left eye image and a right eye image by interpolating the size of the left eye image and the right eye image to fit one screen using the 3D image data. Specifically, the 3D image representation unit 236 separates left eye image data and right eye image data from input 3D image data. Since both left eye image data and right eye image data are included in one frame data, each of the separated left eye image data and right eye image data has a size corresponding to half of the entire screen. Accordingly, the 3D image representation unit 236 may scale up or interpolate the separated left eye image data and right eye image data two times so that the left eye image and the right eye image fit one screen. In addition, if a 3D image is input, the 3D image representation unit 236 may also generate a left eye image and a right eye image by adjusting the size of an object included in the 3D image based on depth information.

Subsequently, the 3D image representation unit 236 outputs the generated left eye image and right eye image to the display unit 250 so that the left eye image and the right eye image are alternately displayed.

The GUI generating unit 238 generates a GUI for setting an environment of a 3D image display apparatus. If a 2D image is converted into a 3D image according to a user's command, the GUI generating unit 238 may generate a GUI including information that the 2D image is being converted into the 3D image.

The audio output unit 240 outputs audio transmitted from the A/V processing unit 230 to an apparatus (external or internal) such as a speaker (not shown).

The display unit 250 outputs an image transmitted from the A/V processing unit 230 so that the image is displayed on the screen. In particular, if a 3D image processed by the 3D image representation unit 236 is input, the display unit 20 alternately outputs a left eye image and a right eye image on the screen.

The storage unit 270 stores an image received from the broadcast receiving unit 210 or the image input unit 220. The storage unit 270 may be embodied as a volatile or a non-volatile memory (such as ROM, flash memory, a hard disk drive, etc.).

The user manipulation unit 280 receives a user manipulation and transmits the input user manipulation to the controlling unit 260. The user manipulation unit 280 may be embodied as at least one of a remote controller, a pointing device, a touch pad, a touch screen, etc.

The glasses signal transmitting/receiving unit 295 transmits a clock signal to alternately open left eye glasses and right eye glasses of 3D glasses 290. The 3D glasses 290 alternately opens left eye glasses and right eye glasses according to the received clock signal. In addition, the glasses signal transmitting/receiving unit 295 may receive status information from the 3D glasses 290.

The controlling unit 260 controls overall operations of the 3D TV 200 according to a user's command transmitted from the user manipulation unit 280. In particular, the controlling unit 260 may convert an input 2D image into a 3D image and output the converted image according to a user's command transmitted from the user manipulation unit 280.

Specifically, the controlling unit 260 extracts an object from an input 2D image and obtains information regarding the depth of the object from the input 2D image. In this case, the depth information may be obtained using a stereo matching method, though it is understood that another exemplary embodiment is not limited thereto, and any method may be used to obtain the depth information.

The controlling unit 260 controls the 3D image representation unit 236 to adjust the size of an object using depth information. In this case, the controlling unit 260 may adjust the size of an object according to the depth value of the object using depth information as absolute standards or based on the relative location of the object that is obtained from depth information.

Specifically, if the depth value of an object exceeds a specific threshold value, the controlling unit 260 may increase the size of the object according to the depth value of the object, and if the depth value of an object is less than a specific threshold value, the controlling unit 260 may decrease the size of the object according to the depth value of the object. Such a process in which the size of an object is adjusted according to a depth value, according to an exemplary embodiment, will be explained with reference to FIGS. 3A to 3D.

As illustrated in FIG. 3A, a first object 310, a second object 320, and a third object 330 are included in a 2D image. As illustrated in FIG. 3A, the first object 310, the second object 320, and the third object 330 are located adjacent to a camera in the order of the first object 310, the second object 320, and the third object 330.

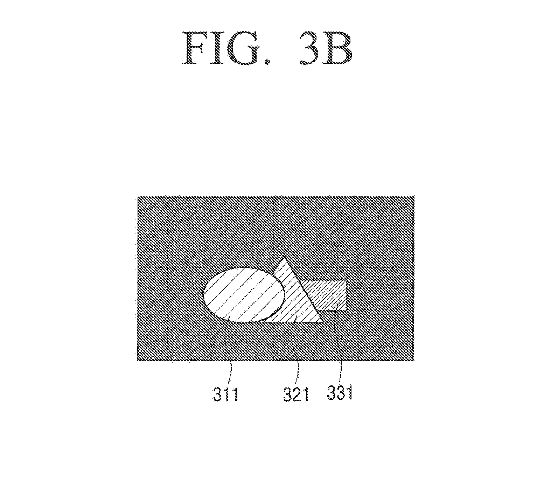

The controlling unit 260 may extract a depth map based on an input 2D image as illustrated in FIG. 3B. In this case, the brighter a portion is on the depth map, the closer the portion is to a camera (that is, the depth value is low), and the darker a portion is, the farther the portion is from the camera (that is, the depth value is high). Accordingly, the first object 311 is the brightest and the third object 331 is the darkest on the depth map.

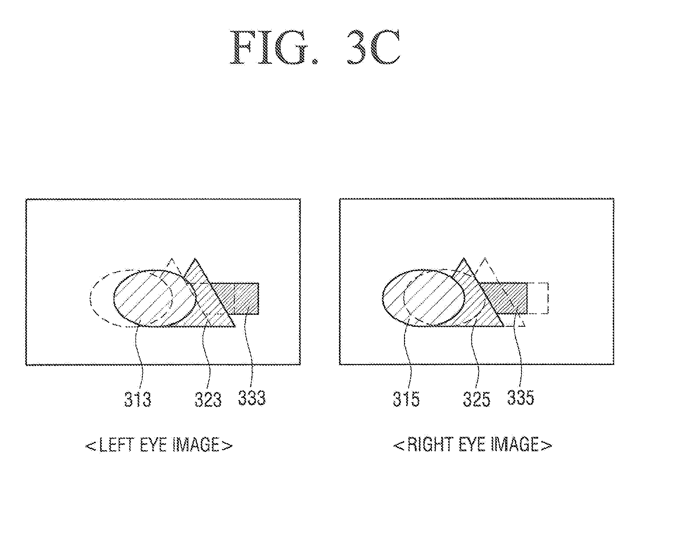

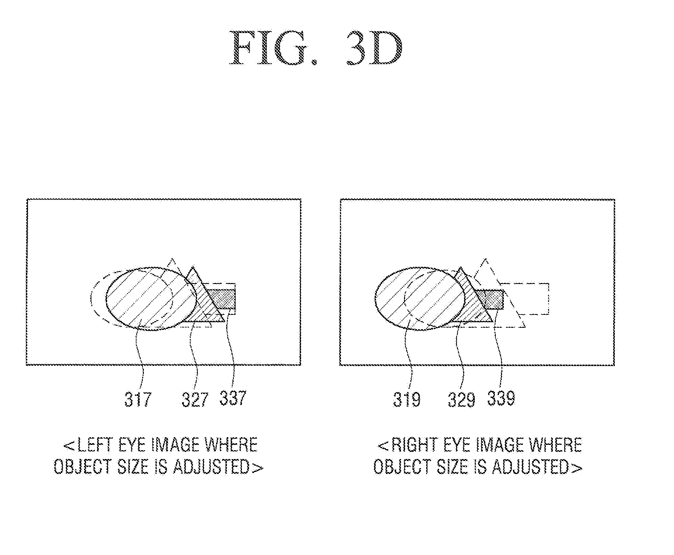

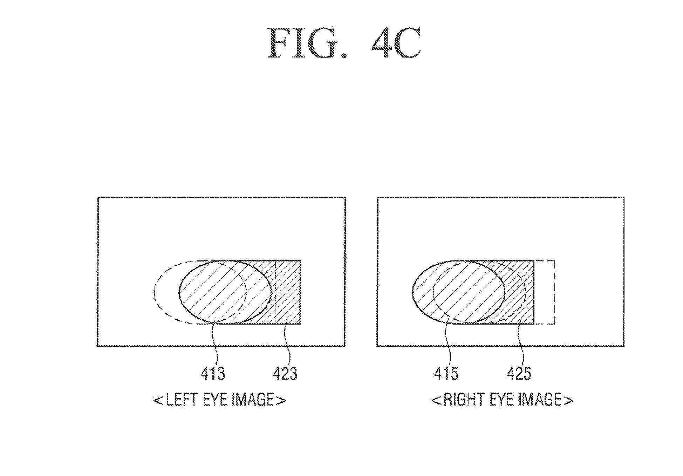

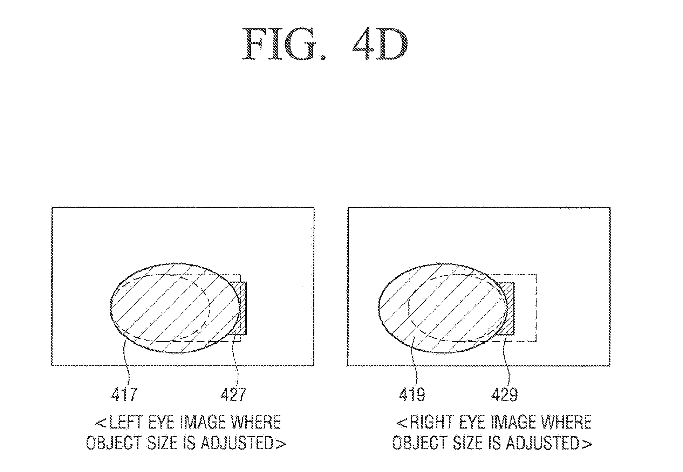

After obtaining the depth map, the controlling unit 260 controls the 3D image representation unit 236 to generate a left eye image and a right eye image by moving the location of an object included in a 2D image left and right. In particular, as illustrated in FIG. 3C, the first object 313, the second object 323, and the third object 333 move to the right in the left eye image, and the first object 315, the second object 325, and the third object 335 move to the left in the right eye image. Herein, how far the objects move may be set when a display apparatus is manufactured or input by a user so as to create optimum stereoscopic sense of a 3D image. The dotted line in FIGS. 3C and 3D and FIGS. 4C and 4D indicate the location and size of an object in an input 2D image.

In addition, the controlling unit 260 adjusts the size of an object included in the left eye image and the right eye image, which are generated according to depth information. In this case, the size of the object is adjusted according to a depth value. Specifically, if the depth value is smaller than a specific threshold depth value, the controlling unit 260 increases the size of the object in proportion to the depth value of the object. If the depth value is greater than a specific threshold depth value, the controlling unit 260 decreases the size of the object in proportion to the depth value of the object.

For example, if the depth value of the first object 311 in FIG. 3B is -1, the depth value of the second object 321 is 0, and the depth value of the third object 331 is 1. However, the depth values are only examples and are not limited thereto.

If a specific threshold depth value is 0, the controlling unit 260 increases the size of the first objects 317, 319 of which depth values are smaller than the specific threshold depth value. In this case, the controlling unit 260 may enlarge the size of the objects by, for example, 10% of their original size. If the depth values of the first objects 317, 319 are -2, the controlling unit 260 may enlarge the size of the objects by, for example, 20% of their original size. That is, if the depth value of an object is smaller than a specific threshold depth value, the controlling unit 260 may enlarge the size of the object in proportion to the depth value.

In addition, the controlling unit 260 decreases the size of the third objects 337, 339 of which depth values are greater than the specific threshold depth value. In this case, the controlling unit 260 may reduce the size of the objects by, for example, 10% of their original size. If the depth values of the third objects 337, 339 are 2, the controlling unit 260 may reduce the size of the objects by, for example, 20% of their original size. That is, if the depth value of an object is greater than a specific threshold depth value, the controlling unit 260 may reduce the size of the object in proportion to the depth value.

In this case, the size of an object may be adjusted to a depth value that is input from a user, or to a depth value that is set at the time of manufacturing.

In addition, the controlling unit 260 does not adjust the size of the second objects 327, 329 of which depth values are the same as the specific threshold depth value.

As described above, the controlling unit 260 allows a user to view a 3D image having more depth and more stereoscopic sense by adjusting the size of an object according to a depth value.

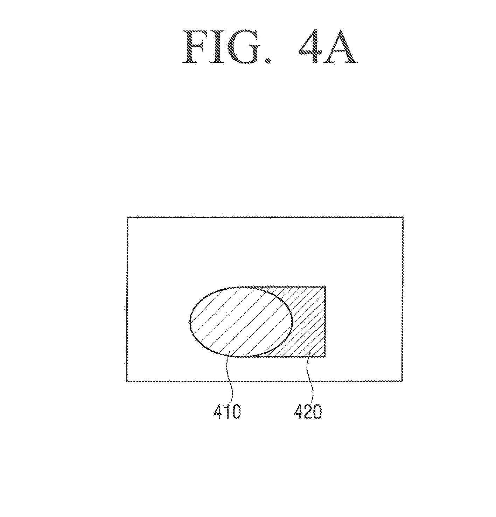

Referring back to FIG. 2, the controlling unit 260 may enlarge the size of an object that is in front from among a plurality of objects and reduce the size of an object that is in the back from among a plurality of objects. That is, the controlling unit 260 may adjust the size of an object according to is relative location, which will be explained with reference to FIGS. 4A to FIG. 4D. FIGS. 4A to 4D are views to explain an image processing process in which the size of an object is adjusted according to its relative location, according to an exemplary embodiment.

As illustrated in FIG. 4A, a first object 410 and a second object 420 are included in a 2D image. As illustrated in FIG. 4A, the first object 410 is positioned closer to a camera than the second object 420.

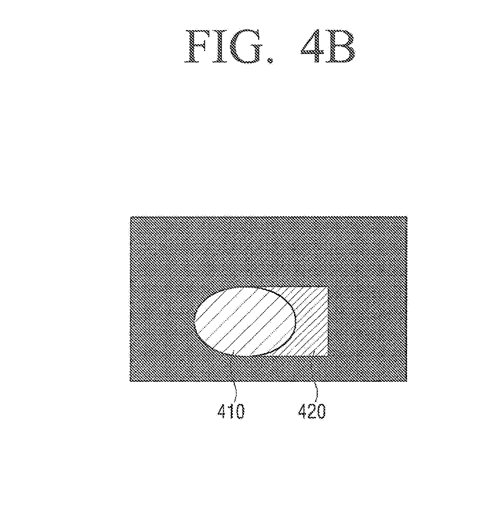

The controlling unit 260 may extract a depth map based on an input 2D image, as illustrated in FIG. 4B. In this case, as the first object 411 is closer to the camera than the second object 421 on the depth map, the first object 411 appears to be bright and the third object 431 appears to be dark.

After obtaining the depth map, the controlling unit 260 controls the 3D image representation unit 236 to generate a left eye image and a right eye image by moving the location of an object included in the 2D image left and right. In particular, as illustrated in FIG. 4C, the first object 413 and the second object 423 move to the right in the left eye image and the first object 415 and the second object 425 move to the left in the right eye image. Herein, how far the objects move may be set when a display apparatus is manufactured or input by a user so as to create optimum stereoscopic sense of a 3D image.

In addition, the controlling unit 260 adjusts the size of an object included in the left eye image and the right eye image, which are generated according to depth information. In this case, the size of the object is adjusted according to the relative location of the object. Specifically, the controlling unit 260 enlarges the size of an object that is close to a camera and reduces the size of an object that is far from the camera based on depth information.

For example, it can be seen that the first object 411 is closer to a camera than the second object 421 based on the depth information obtained from FIG. 4B. Accordingly, as illustrated in FIG. 4D, the controlling unit 260 enlarges the first objects 417, 419 which are determined to be close to the camera and reduces the second objects 427, 429 which are determined to be far from the camera. In this case, the first objects 417, 419 may be enlarged by, for example, 20% of their original size and the second objects 427, 429 may be reduced, for example, by 20% of their original size. Herein, the adjusted value is only an example and is not limited thereto. The size of an object may be adjusted based on the relative location to a depth value which is input from a user, or to a depth value which is set at the time of manufacturing.

In FIG. 4D, the size of the first objects 417, 419, which are determined to be close to the camera, is enlarged, while the size of the second objects 427, 429, which are determined to be far from the camera, is reduced. That is, both the size of the first objects 417, 419 and the size of the second objects 427, 429 are adjusted, but this is only an example. Only the size of the first objects 417, 419 may be enlarged or only the size of the second objects 427, 429 may be reduced according to other exemplary embodiments. That is, only one of the size of the first objects 417, 419 and the size of the second objects 427, 429 may be adjusted.

As described above, as the controlling unit 260 allows a user to view a 3D image having more depth and more stereoscopic sense by adjusting the size of an object according to its relative location.

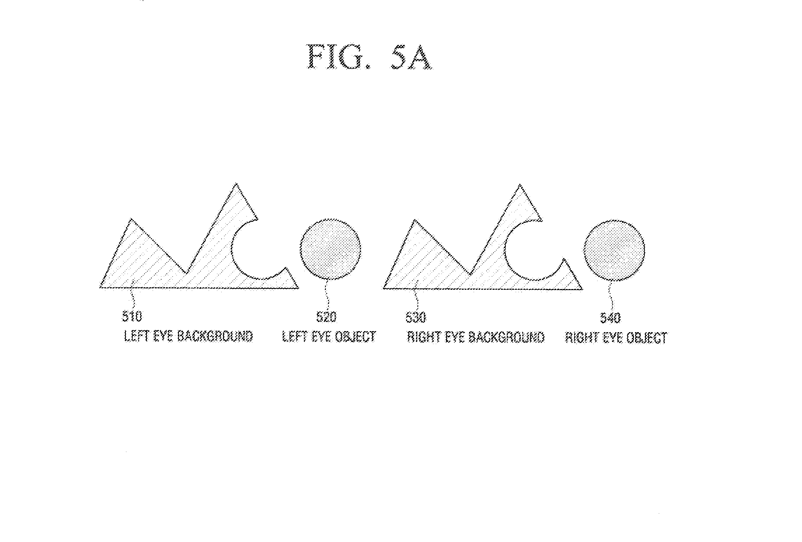

Referring back to FIG. 2, if a gap is created around an object after its size is adjusted, the controlling unit 260 controls the 3D image representation unit 236 to fill the gap around the object by interpolating the background area of the object, as explained with reference to FIGS. 3A to 3D and FIGS. 4A to 4D. This will be explained with reference to FIGS. 5A to 5D.

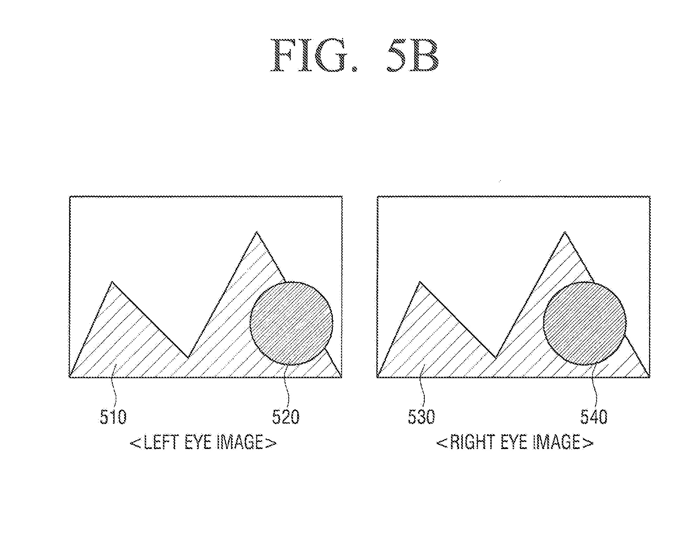

As illustrated in FIG. 5A, backgrounds 510, 530 and objects 520, 540 are included in the generated left eye image and right eye image. FIG. 5B illustrates the left eye image and the right eye image including the backgrounds 510, 530 and the objects 520, 540 in their original size.

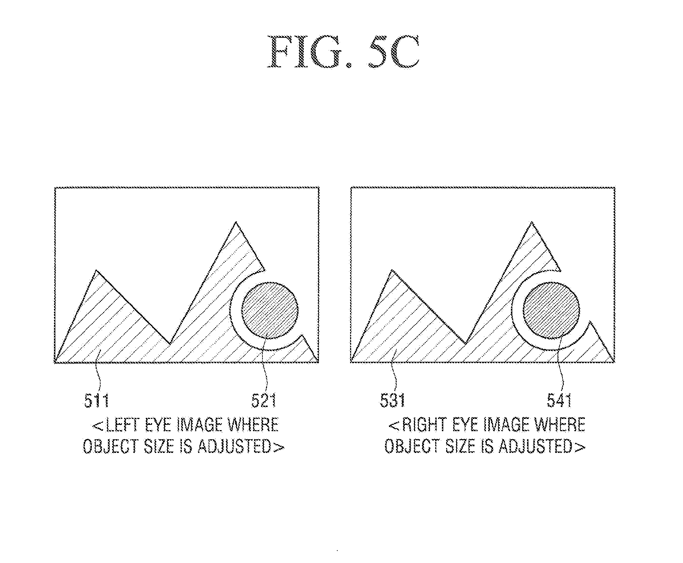

As explained above with reference to FIGS. 3A to 3D and FIGS. 4A to 4D, if the controlling unit 260 determines that the size of the objects 520, 540 should be reduced, a gap may be created around the objects 521, 541 as illustrated in FIG. 5C. If a gap is created, an image may be distorted and thus, an input 2D image may not be converted into a 3D image completely.

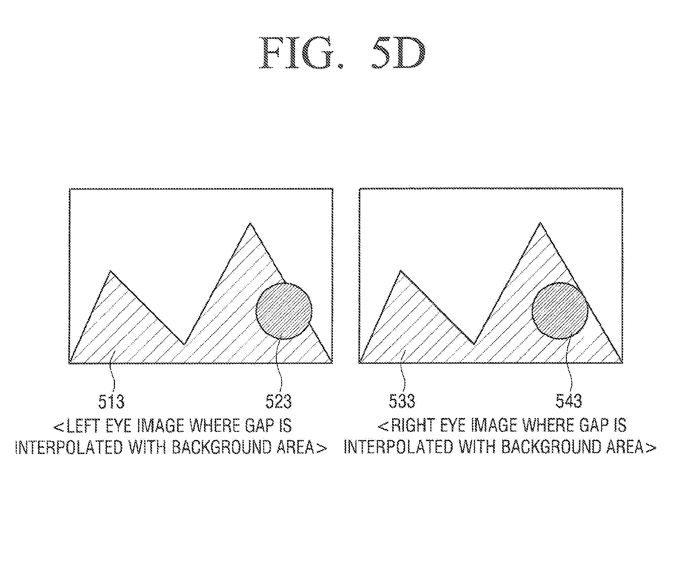

Accordingly, the controlling unit 260 controls to fill the gap by interpolating the backgrounds 513, 533 around the objects 523, 543 of which size is adjusted, as illustrated in FIG. 5D. Specifically, if a gap is created around the objects 523, 543 of which size is reduced, the controlling unit 260 controls the 3D image representation unit 236 to extend the background so as to fill the gap around the objects 523, 543 of which size is reduced.

As described above, a gap around an object of which size is reduced is filled and thus, a user may view a perfect 3D image without image distortion that may occur as the size of the object is adjusted.

In the above description regarding FIGS. 2, FIGS. 3A to 3D, FIGS. 4A to 4D, and FIGS. 5A to 5D, a 2D image is input and converted into a 3D image, but this is only an example. Aspects of exemplary embodiments may be applied when an input image is a 3D image. Specifically, depth information may be extracted through an input 3D image, and the size of an object included in the left eye image and the right eye image generated by the 3D image representation unit 236 may be adjusted based on the depth information so as to generate depth on the 3D image.

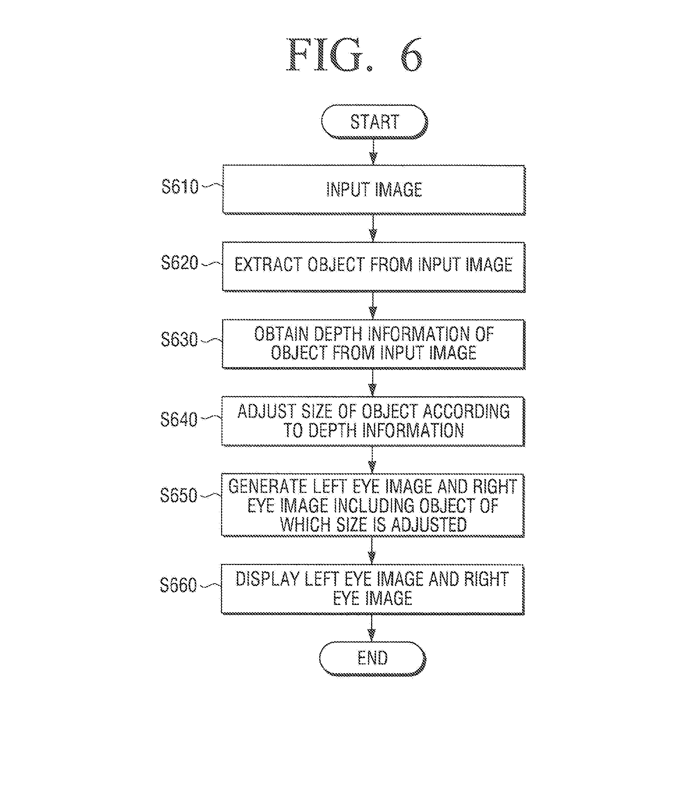

Hereinafter, a method for processing an image will be explained with reference to FIG. 6.

FIG. 6 is a flowchart to explain an image processing process in which the size of an object is adjusted based on depth information according to an exemplary embodiment.

An image is input to a display apparatus 100 (operation S61 0). Once the image is input, the display apparatus 100 extracts an object from the input image (operation S620), and obtains depth information of the object from the input image (operation S630).

Subsequently, the display apparatus 100 adjusts the size of the object according to the depth information (operation S640). Specifically, if it is determined that the distance between a camera and the object is close based on the extracted depth information, the display apparatus 100 enlarges the size of the object, and if it is determined that the distance between the camera and the object is far, the display apparatus reduces the size of the object.

In this case, the display apparatus 100 may adjust the size of the object according to the depth value of the object using the depth information as absolute standards or according to the relative location of the object. Specifically, if the depth value of the object exceeds a specific threshold value, the size of the object may be enlarged according to the depth value of the object, and if the depth value of an object is less than a specific threshold value, the size of the object may be reduced according to the depth value of the object. In addition, the display apparatus 100 may increase the size of an object in front from among a plurality of objects and decrease the size of an object in the back from among a plurality of objects.

Subsequently, the display apparatus 100 generates a left eye image and a right eye image including the object of which size is adjusted (operation S650), and alternately displays the left eye image and the right eye image (operation S660).

As described above, the size of an object is adjusted using depth information of an input image and thus, a user may view a 3D image having more depth and more stereoscopic sense.

While the above exemplary embodiments have been described in relation to a display apparatus, it is understood that exemplary embodiments are not limited thereto, and may be applied to any image processing device, such as a set-top box or any stand alone device.

While not restricted thereto, exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, exemplary embodiments may be written as computer programs transmitted over a computer-readable transmission medium, such as a carrier wave, and received and implemented in general-use or special-purpose digital computers that execute the programs. Moreover, one or more units of the display apparatus 100 and the television 200 can include a processor or microprocessor executing a computer program stored in a computer-readable medium.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for processing an image, the method comprising:
extracting an object from an input image;
obtaining depth information of the object from the input image;
adjusting a size of the object using the depth information; and
alternately outputting a left eye image including the object of which the size is adjusted and a right eye image including the object of which the size is adjusted.

2. The method as claimed in claim 1, wherein the adjusting comprises increasing the size of the object if a depth value of the object is less than a threshold value, and decreasing the size of the object if the depth value of the object exceeds the threshold value.

3. The method as claimed in claim 1, wherein the adjusting comprises increasing the size of the object if the object is in front from among a plurality of objects and decreasing the size of the object if the object is in back from among the plurality of objects.

4. The method as claimed in claim 2 or claim 3, wherein the adjusting further comprises:
if there is a gap around the object of which the size is adjusted, filling the gap by interpolating a background area of the object.

5. The method as claimed in any one of claim 1 to claim 4, wherein the adjusting comprises adjusting the size of the object to a value input by a user.

6. The method as claimed in any one of claim 1 to claim 4, wherein the adjusting comprises adjusting the size of the object to a value predefined at a time of manufacturing.

7. The method as claimed in any one of claim 1 to claim 6, further comprising:
generating the left eye image and the right eye image corresponding to the input image,
wherein the input image is a two-dimensional (2D) image, and
wherein the adjusting comprises adjusting the size of the object included in the left eye image and the right eye image.

8. The method as claimed in any one of claim 1 to claim 6, further comprising:
generating the left eye image and the right eye image before the object is extracted,
wherein the input image is a three-dimensional (3D) image.

9. An image processing apparatus, comprising:
an image input unit which receives an image;
a 3D image representation unit which generates a left eye image and a right eye image corresponding to the input image; and
a controlling unit which controls the 3D image representation unit to extract an object from the input image, obtain depth information of the object from the input image, and adjust a size of the object using the depth information.

10. The image processing apparatus as claimed in claim 9, wherein the controlling unit controls to increase the size of the object if a depth value of the object is less than a threshold value and decrease the size of the object if the depth value of the object exceeds the threshold value.

11. The image processing apparatus as claimed in claim 9, wherein the controlling unit controls to increase the size of the object if the object is in front from among a plurality of objects or decrease the size of the object if the object is in back from among the plurality of objects.

12. The image processing apparatus as claimed in claim 10 or claim 11, wherein the controlling unit controls, if there is a gap around the object of which the size is adjusted, the 3D image representation unit to fill the gap by interpolating a background area of the object.

13. The image processing apparatus as claimed in any one of claim 9 to claim 12, wherein the controlling unit controls to adjust the size of the object to a value predefined at a time of manufacturing.

14. The image processing apparatus as claimed in any one of claim 9 to claim 13, wherein:
the input image is a 2D image; and
the controlling unit controls to generate the left eye image and the right eye image corresponding to the 2D image and adjust the size of the object included in the left eye image and the right eye image.

15. The image processing apparatus as claimed in any one of claim 9 to claim 13, wherein:
the input image is a 3D image; and
the 3D image representation unit generates the left eye image and the right eye image before the object is extracted.
